# FASCICULE DE BREVET EUROPEEN

(11) **EP 2 199 479 B1**
(45) Date de publication et mention de la délivrance du brevet: **22.02.2012**
(21) Numéro de dépôt: 09178419.9
(22) Date de dépôt: 08.12.2009
(51) Int. Cl.: E04B 1/76, E04B 1/10, E02D 27/01

(54) **Construction basse energie et procédé de construction**
Niedrigenergiebau und Bauverfahren
Low-energy construction and construction method

(30) Priorité: 09.12.2008 FR 0806914
(43) Date de publication de la demande: 23.06.2010
(73) Titulaire: Abdistri S.A., 1537 Luxembourg (LU)
(72) Inventeur: Salkin, Nicolas, 1537 Luxembourg (LU)
(74) Mandataire: Pecher, Nicolas

(56) Documents cités:
- EP-A- 1 607 537
- WO-A1-95/04197
- DE-U1- 20 301 570
- US-A- 4 253 288
- US-B1- 6 224 700

## Description

### Domaine technique

L'invention se rapporte au domaine de la construction de bâtiments pour usage d'habitation, de bureau, de commerce ou d'industrie. Plus particulièrement, l'invention se rapporte à une construction nécessitant peu d'énergie tant pour son exploitation que pour sa construction, ainsi qu'un procédé pour construire un tel bâtiment.

### Description de l'état de la technique

Le chauffage des bâtiments d'habitation ou d'usage commercial constitue une part importante de la consommation énergétique. La part du chauffage des bâtiments constitue approximativement 40% de l'énergie consommée par l'homme. Il apparaît comme de plus en plus souhaitable de minimiser ces pertes d'énergies. De nombreux efforts ont été faits ces dernières années : isolation des toitures par installation de laine de roche ou de laine de verre entre les chevrons, utilisation de châssis de fenêtres à double ou triples vitrages, utilisation de murs doubles comportant un vide dans lequel un panneau isolant est inséré. L'isolation au moyen de panneaux de laine de roche ou de mousse isolante n'est pas toujours une solution idéale : ces panneaux sont fournis dans des dimensions préétablies, et doivent être découpés en fonction des besoins précis du bâtiment. La découpe et la pose correcte de panneaux nécessite un savoir faire et un temps important. Des imprécisions dans la découpe causent des pertes de chaleur. Enfin, de la découpe de panneaux de dimensions préétablies résulte toujours une quantité de déchets.

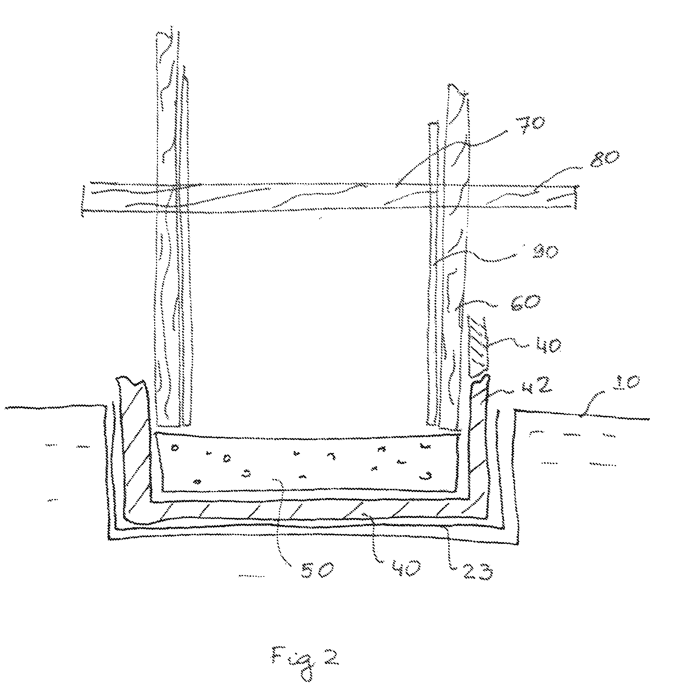

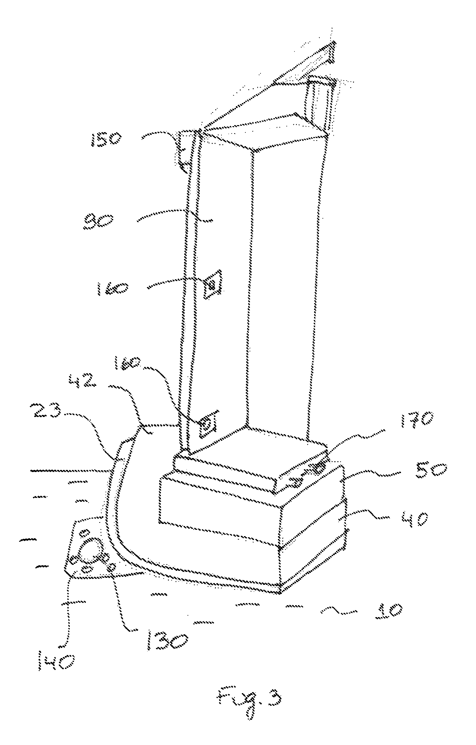

On connaît par WO2005/042854 une fondation pour un bâtiment. Une dalle de béton 101 est coulée sur des blocs de polystyrène expansé 102, 102A, d'épaisseur comprise entre 20 et 30 cm. Entre deux tels blocs, une membrure 103 de la dalle de béton 100 assure le report de la charge vers le sol 108. Ces membrures 103 constituent des ponts thermiques entre le sol 108 et l'intérieur du bâtiment. De plus, comme indiqué à la figure 3 de ce document, à la périphérie du bâtiment, les membrures périphériques 303, associées aux murs verticaux 301, constituent un nouveau pont thermique. Enfin, la dalle 101 ne permet pas de jouer le rôle de fondation du bâtiment, mais nécessite, en particulier dans des sols meubles, une structure de fondation sous-jacente (éléments 203 et 204 des figures 2 et 3). Ces éléments nécessitent à leur tour la réalisation d'une fouille de forme complexe, ce exclut l'automatisation et l'industrialisation du processus. Ce document n'adresse qu'une partie du problème énergétique d'un bâtiment, à savoir son isolation du sol sous-jacent, mais n'adresse pas le problème global du bâtiment.

On connaît par EP1607537 une structure de bâtiment dans lequel des poutres 20 en bois constituent une ossature. Des panneaux de bois 21 et 22 sont appliqués tant à la face intérieure qu'à la face extérieure de cette ossature. Du polyuréthane liquide est injecté dans les vides ainsi formés, et forme une mousse qui assure l'isolation. Dans ce bâtiment, les poutres 20 constituent des ponts thermiques entre l'intérieur et l'extérieur du bâtiment. De plus, tant au niveau des jointures des solives 37 avec les parois verticales du bâtiment qu'au niveau de la fondation, la continuité de l'isolation n'est pas bien assurée. Il est en effet nécessaire de poser des matelas de matière isolante (élément 42 de la figure 3) pour assurer l'isolation. Ces éléments doivent être découpés à dimension, ce qui représente de la main d'oeuvre, et risque d'être inefficace si la découpe et le placement ne sont pas exécutés avec précision. Encore une fois, ces exigences excluent l'industrialisation du processus.

On connait par WO95/04197 une structure légère de bâtiment constitué par une ossature en bois portant une enveloppe isolante englobant le bâtiment.

Il existe donc un besoin pour un bâtiment assurant une bonne isolation thermique, qui soit facile à réaliser, demandant peu de main-d'oeuvre, ainsi qu'un procédé de construction d'un tel bâtiment qui permette l'industrialisation du processus de construction.

### Résume de l'invention

La présente invention a pour but de permettre la construction de bâtiments économiques en énergie, de manière efficace et rapide. Pas de joints - continu

Suivant un premier aspect, l'invention concerne un procédé de construction d'un bâtiment comportant les étapes de :
a) réalisation d'une fouille;
b) application d'une couche de propreté dans le fond et sur les parois verticales de la fouille;
c) application d'une couche d'une mousse isolante sur la dite couche de propreté ;
d) versage d'une dalle sur ladite couche de mousse isolante ;
e) élévation d'une charpente sur la dite dalle;
f) pose des faces internes des murs à l'intérieur de ladite charpente ;
g) pistolage d'un pare vapeur à la face extérieure de ladite cloison intérieure ;
h) application par pistolage d'une couche d'une mousse isolante sur le dit pare vapeur.
La charpente est une charpente structurelle légère, constituée en bois ou en profilé métallique.

On peut avantageusement envelopper la charpente légère d'une bâche, afin de permettre la poursuite de la construction en cas d'intempéries, sur des extensions prévues sur la charpente.

De préférence, on installe les utilités telles que les conduites d'utilités telles que l'eau et l'électricité et/ou au moins un châssis de porte ou de fenêtres avant l'étape (h).

Suivant un second aspect, l'invention concerne un bâtiment basse énergie comportant :
- une fondation comportant une couche d'une mousse isolante supportant une dalle;
- une charpente posée sur la dite dalle;
- une face interne de murs et de la toiture appliquée à l'intérieur de la charpente structurelle légère ;
- une couche d'une mousse isolante de superstructure appliquée sur la face extérieure des cloisons intérieures, ladite couche isolante de fondation et ladite couche de mousse isolante de superstructure étant jointifs de manière à former une enveloppe continue englobant le bâtiment.

De préférence la dalle est réalisée dans une épaisseur telle qu'elle constitue une masse d'inertie thermique pour le bâtiment. La dalle est réalisée de préférence en béton et dans une épaisseur supérieure à 20 cm.

Les couches de mousse isolante de fondation et de superstructure ont de préférence une épaisseur comprise entre 20 cm et 40 cm et de manière encore préférée entre 30 et 60 cm

### Breve description des dessins

La Fig. 1 est une vue schématique en coupe des fondations d'un bâtiment suivant l'invention, en cours de construction.

La Fig. 2 est une vue schématique en coupe d'un bâtiment suivant l'invention, lors d'une étape ultérieure de la construction.

La Fig. 3 est une vue en perspective d'une portion un bâtiment suivant l'invention, à l'issue de l'étape (f) de la construction.

La Fig. 4 est une vue en perspective de cette même portion, à l'issue de l'étape (h) de la construction.

### Description détaillée de modes de réalisation de l'invention

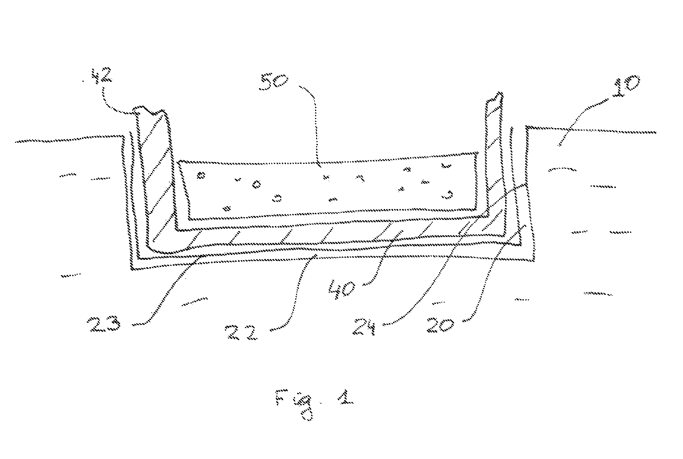

En se référant à la Fig. 1, on décrit ci-après chacune des étapes (a) à (h) du procédé de construction de l'invention.

Etape a : Une fouille 20 est d'abord creusée dans le sol 10. Cette fouille peut être profonde d'un ou même deux niveaux, ou suivant les nécessités du bâtiment et les conditions du sol naturel, réduite à une simple mise à niveau du sol. Cette fouille 20 est de forme simple, à savoir la forme d'un plateau horizontal sur toute l'étendue du bâtiment. Cette fouille 20 peut donc être réalisée avant un engin de terrassement commandé automatiquement, permettant de respecter la forme désirée à quelques centimètres près. La fouille 20 peut ainsi servir de moule pour les opérations qui suivent. Les drains peuvent être mis en place sur le périmètre de la fouille 20, ainsi que les matériaux filtrants qui l'entourent. Un réseau d'échange thermique peut éventuellement être mis en place sur le fond 22 de la fouille 20 en vue de réaliser un "puit canadien" limité à l'empreinte du bâtiment, ou étendu au-delà de celle-ci.

Etape b : Une mince couche (par exemple de 2 à 5 cm) de propreté 23 est coulée dans le fond 22 de la fouille ou projeté sur les parois verticales 24 de celle-ci. Cette couche de propreté 23 peut être réalisée en béton, par exemple en micro-béton (béton dans lequel les granulats sont de petites dimensions) bien adapté aux couches minces, éventuellement renforcé de fibres dans la masse. Sur le micro-béton, on peut projeter une couche imperméable et pare-vapeur par exemple à base d'émulsion de bitume et latex en 2 à 3 mm d'épaisseur ou par exemple en élastomère de très haute résistance mécanique et très grande allongement à la rupture, imperméable non pare-vapeur comme un produit polyuréthane comme le Baytec® de Bayer. Le choix du produit est notamment déterminé par les valeurs de la fonction pare-vapeur recherchée en fonction des régimes climatiques et intérieurs du bâtiment.

Etape c: Après coagulation ou polymérisation et séchage, on peut alors appliquer par pistolage ou par versage une couche 40 de mousse isolante. Les procédés et produits pour le pistolage de mousse de polyuréthane sont bien connus. Les produits des firmes BAYER (gamme de produits Baymer® ), BASF (marque ELASTOGRAN Reacttherm®), DOW (marque Dow SPF), produisent des systèmes de résines multicomposants formulés spécifiquement pour les usages et caractéristiques recherchées, permettant de produire en atelier ou sur site des mousses rigides isolantes. Typiquement, les mousses résultantes peuvent avoir les caractéristiques suivantes:
- densité: 30 à 60 kg/m3
- conductivité thermique À: 0.018 à 0.028 W/m.K
- stabilité dimensionnelle: < 1 à 2%
- cellules fermées: 94 à 98 %
- résistance à la pression: 150 à 350 kPa
- résistance à la traction: 300 à 450 kPa
- résistance à la température: de -50..+110 à -170..+125 °C
La couche de mousse isolante 40 présente une partie supérieure 42 qui peut avantageusement se prolonger de quelques centimètres ou quelques dizaines de centimètres au dessus du sol 10. Certains accessoires externes devant se prolonger dans le bâtiment (par exemple un réseau de « puits canadiens ») peuvent faire l'objet d'un coffrage spécial non moussé, ou bien au contraire le moussage peut être étendu en continuité sur ces extensions pour les isoler. La structure du bâtiment de l'invention étant plus légère que la construction traditionnelle, la stabilité de la fondation ainsi constituée ne pose pas de problème.

Etape d : On peut alors mettre en place les éventuels accessoires et renforts de béton (ferraillages), les éventuels réseaux d'écoulement ou d'apport (eaux, électrique), divers accessoires comme des échangeurs thermiques d'eau d'écoulement récupérant la chaleur de celles-ci, et les empiétements de la charpente. On peut alors également disposer des pièces servant d'embases aux futures colonnes. La dalle de fondation 50 est alors coulée sur la couche de mousse isolante 40. Cette dalle de fondation 50 peut avantageusement être une dalle épaisse, par exemples de 20 à 35 cm d'épaisseur, ou plus. Il n'est pas nécessaire d'armer cette dalle avec un ferraillage important, puisque la solidité est obtenue par sa masse. Elle doit être réalisée dans un matériau versable, en un ou plusieurs constituant, avoir une résistance suffisante pour résister à la charge de la structure qu'elle va supporter, et présenter une inertie thermique élevée. Le béton, et en particulier le béton maigre et peu renforcé, éventuellement renforcé par inclusion de fibres dans la masse, constitue le matériau de choix, mais on peut réaliser la dalle en d'autres matériaux, tels que des débris concassés assemblés par une résine. De la terre battue peut également convenir pour des constructions légères.

Etape e : Lorsque la dalle de fondation 50 est prise, on assemble alors sur celle-ci une ossature légère, représentée schématiquement à la Fig. 2. Celle-ci peut être en bois ou en métal. Les structures et méthodes d'assemblage de telles structures sont bien connues par exemple des charpentes bois liaisonnées par pièces de marque BAT, ou des profilés à froid ARCELOR galvanisés et pré troués pour l'assemblage. Des profilés à froid issus de feuillards galvanisés à chaud, fournis par exemple par la société Sadef peuvent convenir pour la structure. Des montant verticaux 60 sont posés sur la dalle de fondation 50, et fixés sur les empiètement repris dans la dalle ou fixés sur la dalle elle-même Des solives 70 sont assemblées aux montants verticaux. Les solives 70, ainsi que les éléments de la charpente du toit peuvent avantageusement être prolongés de portions de prolongement 80, nommées "antennes". Ces prolongement peuvent remplir trois fonctions : elles permettent de positionner, stabiliser et construire un échafaudage qui facilite l'accès à la structure. Elles permettent de positionner et fixer des éléments de charpente légère et provisoire qui englobent la structure en construction dans une bâche enveloppante qui prémunit le bâtiment en construction ainsi que les ouvriers contre les intempéries et autres variations climatiques, ainsi que contre les promeneurs et voleurs. Les antennes 80 permettent aussi de positionner correctement dans l'espace des rails de guidage, dont la fonction est décrite ci-après. Les antennes 80 peuvent être des prolongements de l'ossature légère, mais peuvent avantageusement être des tiges vissées dans des moyens de fixation de l'ossature, pour pouvoir être dévissées à la fin de la construction. On munit la charpente de contreventements et de cadres destinés à recevoir les châssis de portes ou de fenêtres, ainsi que les accessoires traversants, s'il échet.

Etape f : On peut alors installer, sur la face intérieure de l'ossature, des panneaux 90 constituant l'habillage intérieur du bâtiment. Ces panneaux peuvent par exemple être des plaques de plâtre (connus sous le nom de Placoplatre® ou Gyproc), des planches ou des panneaux de bois. Les divers corps de métiers (plomberie, électricité, chauffage etc.) peuvent alors intervenir pour l'installation des circuits. Leur tâche est grandement facilitée par l'accès qui leur est offert tant par l'intérieur que par l'extérieur du bâtiment, tant au niveau du sol qu'aux étages grâce à l'échafaudage périphérique. De manière connue, une chape peut être posée sur la dalle, après installation de conduits de chauffage par le sol. Le chauffage par le sol permet d'emmagasiner la chaleur dans la dalle 50, elle-même isolée du sol, conférant ainsi une excellente stabilité thermique au bâtiment. Les châssis sont placés dans les murs avant les opérations de pistolage de mousse. Les châssis sont avantageusement livrés au chantier montés dans leur embrasure. Celle-ci est conçue en largeur relativement importante, servant de seuil tant sur la face interne que sur la face externe. Elle est avantageusement réalisée à partir de profilés continus, coupés à onglet et assemblé avec collage intégral, de largeur adaptée à l'épaisseur totale du mur, et de quelques cm d'épaisseur, de forme permettant avantageusement de constituer les seuils et les repérages ou rainures de positionnement des châssis (par ex. châssis simple à double vitrage) ou des châssis (par ex. châssis double, 2 doubles vitrages), constituant un moyen simple d'installer 2 châssis standard, à l'instar des habitations dans les pays froids, en vue d'obtenir une excellente isolation thermique. L'embrasure est avantageusement réalisée en mousse de polyuréthane de haute densité, aussi dénommée "structurelle" ou "à peau", permettant des finis divers, tout en présentant d'excellentes caractéristiques isolantes. Une fois mis en position, avant le placement de la mousse, l'embrasure présente un important débordement vers l'extérieur permettant d'y faire terminer le pistolage de mousse en jonction chimique et fonctionnelle avec l'embrasure (garantissant une continuité optimale des fonctions d'isolation, pare-vapeur sur la face interne, relative perméabilité à la vapeur sur la face externe, étanchéité à l'air, étanchéité aux pluies, infiltrations et eaux capillaires.

Etape g : Dans l'étape suivante, on applique, sur la face extérieure des panneaux 90, un pare vapeur. Ce pare vapeur peut par exemple être obtenu en pistolant un mélange de 80% de bitume avec 20% de latex. Le pare vapeur du bâtiment est situé là ou sa fonction est requise, à savoir entre la couche isolante et le coté chaud, ici l'intérieur du bâtiment.

Etape h : Dans l'étape suivante, on applique, sur toute la surface extérieure du bâtiment, une couche de mousse isolante 40. Cette application est réalisée par pistolage (également appelé pulvérisation, projection ou giclage). Dans le cas de surfaces horizontales, on peut également procéder par versage. Cette couche se raccorde à la partie supérieure 42 de la mousse isolante 40 de la fondation, et remonte sur les parois pour recouvrir la toiture. De la sorte, le bâtiment est entièrement englobé dans une enveloppe isolante, continue des fondations à la toiture, en passant par les parois latérales. Les seules ouvertures sont les cadres prévus pour les portes et les fenêtres. Afin de faciliter le travail du pistolage, et l'obtention d'une couche d'épaisseur uniforme, on peut installer des rails de guidage sur les antennes 80 sur lesquelles s'appuie l'outil de pistolage. Un opérateur expérimenté obtient une surface plate, sans aspérités. On peut, si on le souhaite, passer une ponceuse pour poncer les éventuels aléas de pistolage et les aspérités résiduelles.

La Fig. 3 est une vue en perspective d'une portion un bâtiment suivant l'invention, à l'issue de l'étape (f) de la construction. Outre les éléments déjà décrits, on y a représenté le drain 130 et le matériau filtrant 140 qui l'entoure. Une poutre de ceinture 150 entoure le bâtiment. Après installation des utilitaires électriques 160 et autres, dont les canalisations sont appliquées sur la face externe du panneau 90, on applique un pare-vapeur sur cette face externe. Les conduits de chauffage par le sol 170 sont disposés sur la dalle 50 avant la pose de la chape 180.

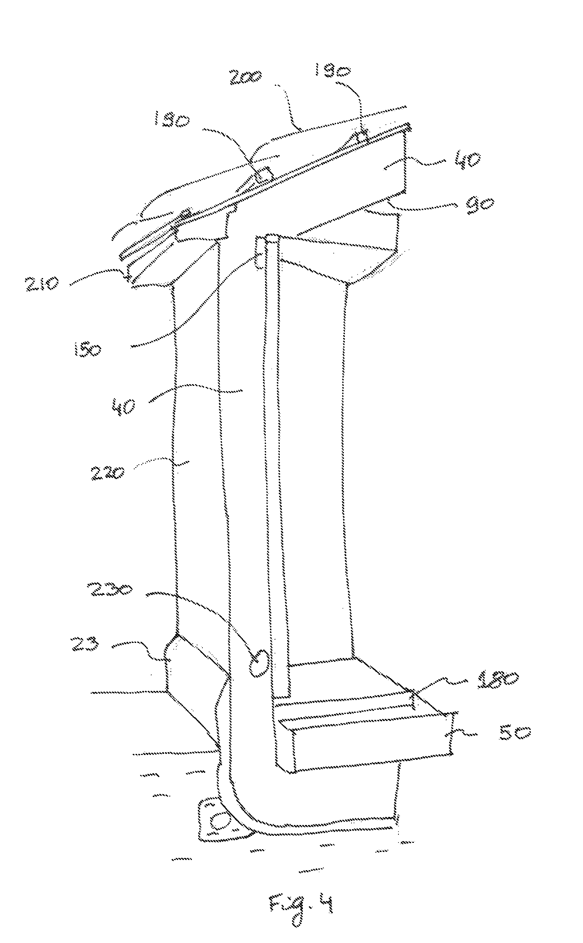

La Fig. 4 est une vue en perspective de cette même portion, à l'issue de l'étape (h) de la construction. La couche de mousse isolante 40 a été étendue à toute la surface extérieure du bâtiment, y compris la toiture. Des pannes 190 ont été fixées directement dans la mousse 40, et supportent des tuiles 200. Une génoise 210 supporte la partie inférieure de la couverture de toit. La face extérieure 220 de la couche isolante 40 sur les murs verticaux est prête à recevoir une couche de finition de crépi comme décrit ci-dessus, ou un parement de briques. Les utilités, telles que les canalisation électriques, ou d'aspiration centralisée peuvent avantageusement passer dans des passages 230 dans la couche de mousse isolante 40.

Le bâtiment ainsi réalisé est parfaitement isolé. Il est également imperméable aux passages d'air caractéristiques des mises en oeuvre d'isolants par panneaux, et ce sur toute l'épaisseur de l'isolant et sur toute l'étendue de la paroi du bâtiment. Il est également imperméable aux pluies et aux divers éléments atmosphériques. Il reste à assurer la finition extérieure, tant des murs verticaux que du toit. Les finitions des murs verticaux sont choisies en fonction du goût ou d'autres impératifs. On peut appliquer un crépi classique en appliquant un primer d'adhésion et en incorporant éventuellement une toile de fibre de renfort dans le crépi. Ce crépi peut descendre jusquà recouvrir la partie supérieure de la couche de propreté appliqué sur la périphérie de la fouille. On peut également rapporter tout type de bardage et toiture par collage ou fixation mécanique sur des platines isolantes reprises dans la mousse rigide. Les platines peuvent être constituées de deux plaques parallèles, distantes d'environ 20 cm, de 15 x 15cm de surface chacune, jointes par de la mousse polyuréthane de haute densité. Les qualités isolantes de la mousse évitent tout pont thermique entre les plaques, et la résistance mécanique de la mousse permet d'obtenir des charges à la rupture en traction de plus de 600 kg. Chaque plaque est avantageusement dotée de moyens de fixations mécaniques comme des trous, des trous filetés, des pattes trouées ou autres présentations suivant les pièces rapportées à y fixer. Les platines sont mises en place par fixation d'une des plaques sur la structure portante à l'intérieur de la couche d'isolation et avant l'application de celle-ci, de manière telle que l'isolant rapporté par pistolage soit en continuité de celui isolant les plaques l'une de l'autre. Les accessoires de fixation de la plaque externe seront donc utilisables sur la surface externe de la couche isolante, sans aucun pont thermique avec l'intérieur.

Le bâtiment suivant l'invention présente de nombreux avantages : l'isolant est situé là où il est le plus efficace, à savoir sur la face externe du bâtiment, englobant un maximum de masse thermique. Le produit isolant présente le meilleur coefficient de résistance thermique connu actuellement; l'isolant est continu, sans joints ni pont thermiques, aboutissant à une réalisation sans défauts résultants des matériaux et procédés utilisés; la matière de la couche d'isolant procure les fonctions d'étanchéité, permettant de réaliser divers bardages de murs, couvertures de toiture, ainsi que placement d'accessoires dans ces bardages et toitures (par exemple comme des panneaux récepteurs solaires) sans que celles-ci ne doivent être parfaitement étanches; la mise en oeuvre de la matière isolante continue, sur site, par pistolage, et ses caractéristiques structurelles constitue une coque homogène et cohésive participant à la tenue structurelle, évitant les chocs thermiques sur les matériaux ayant une fonction technique, éliminant les bruits externes, les bruits entre les matériaux, les bruits de vent et de passages d'air. Le baâtiment offre donc une meilleure isolation acoustique aux bruits extérieurs. Le mode d'assemblage permet de réaliser le bâtiment avec de la main d'oeuvre peu qualifiée pour la plupart des tâches.

Dans les régions de permafrost, où la stabilité du bâtiment est garantie par le gel permanenet du sol, l'isolation des fondations du bâtiment de l'invention permet d'éviter les pertes de chaleur vers le bas, qui risqueraient de dégeler le sol et de mettre la stabilité du bâtiment en péril. Les mêmes techniques et les mêmes outils sont utilisés pour constituer les couches d'isolation de la fondation (40), des murs extrérieurs (...) et de la toiture (..)

Le procédé de construction d'un bâtiment suivant l'invention présente également de nombreux avantages :

Par rapport à un bâtiment construit suivant les méthodes artisanales et par des organisations corporatistes traditionnelles, la méthode de construction suivant l'invention, n'étant plus tributaire des aléas de la météo, permet l'élaboration d'un planning fixe et fiable, et autorise une réduction de 5% à 50% des délais de livraison.

La plupart des fonctions et avantages techniques de ce bâtiment découlent d'un nombre restreint de matériaux et d'intervenants. Le risque de mauvaise mise en oeuvre est donc peu dispersé et facile à gérer. Le procédé de construction de l'invention est particulièrement économique du fait qu'il ne nécessite pas de moule ou de support spécial pour recevoir la mousse isolante : dans le cas de la fondation, c'est la fouille, préalablement égalisée par un béton de propreté, qui constitue le moule. Dans le cas des murs verticaux et du toit, ce sont les faces externes des panneaux intérieurs 90, qui constituent le support. L'opération de pistolage de la mousse isolante est facile à réaliser et ne nécessite pas de main-d'oeuvre spécialisée. De plus, il est possible de monter le pistolet sur un bras robotisé et de commander l'opération automatiquement, sur base d'un programme piloté par les plans de la construction. Le caractère continu et uniforme de la couche d'isolation permet d'effectuer de manière simple des calculs prévisionnels d'isolation lors de la conception d'un bâtiment et fournit surtout un bâtiment particulièrement bien isolé. On estime que 11 de pétrole utilisé pour la production de mousse isolante permet de réaliser une économie de pétrole de 11 par an pour le chauffage du bâtiment isolé.

## Revendications

1. Procédé de construction d'un bâtiment comportant les étapes de :
a) réalisation d'une fouille (20) ;
b) application d'une couche de propreté (23) dans le fond (22) et sur les parois verticales (24) de la fouille (20) ;
c) application d'une couche (40) d'une mousse isolante sur la dite couche de propreté (23) ;
d) versage d'une dalle (50) sur ladite couche (40) de mousse isolante ;
e) élévation d'une charpente sur ladite dalle (50) ;
f) pose des faces internes des murs et de la toiture (90) à l'intérieur de ladite charpente ;
g) pistolage d'un pare vapeur à la face extérieure de ladite face interne (90) ;
h) application par pistolage d'une couche d'une mousse isolante (40) sur ledit pare vapeur, ladite couche d'une mousse isolante (40) se raccordant à la partie supérieure (42) de la mousse isolante (40) appliquée sur la couche de propreté (23) et remontant sur les parois du bâtiment pour recouvrir la toiture ;
pour obtenir une enveloppe isolante continue, sans joints, des fondations à la toiture, en passant par les parois latérales.

2. Procédé de construction suivant la revendication 1 **caractérisé en ce qu'**on enveloppe la charpente d'une bâche, afin de permettre la poursuite de la construction en cas d'intempéries.

3. Procédé de construction suivant l'une quelconque des revendications précédentes **caractérisé en ce qu'**on installe les utilités (160) telles que les conduites d'eau et d'électricité avant l'étape (h).

4. Procédé de construction suivant l'une quelconque des revendications précédentes **caractérisé en ce qu'**on installe au moins un châssis de porte ou de fenêtres avant l'étape (h).

5. Bâtiment basse énergie comportant :
- une fondation réalisée dans une fouille (20) comportant une couche d'une mousse isolante (40) de fondation supportant une dalle (50);
- une charpente posée sur ladite dalle (50);
- une face interne des murs et de la toiture (90) appliquée à l'intérieur de la charpente structurelle légère ;
- un pare vapeur applique par pistolage sur la face externe de ladite face interne des murs et de la toiture (90) ;
- une couche d'une mousse isolante (40) de superstructure appliquée par pistolage sur la face extérieure des faces internes des murs et de la toiture (90) et/ou par versage dans le cas de surfaces horizontales, ladite couche isolante (40) de fondation et ladite couche de mousse isolante (40) de superstructure étant jointifs de manière à former une enveloppe continue, sans joints, des fondations à la toiture, en passant par les parois latérales du bâtiment, englobant le bâtiment.

6. Bâtiment suivant la revendication 5 **caractérisé en ce que** ladite dalle (50) est réalisée dans une épaisseur telle qu'elle constitue une masse d'inertie thermique pour le bâtiment.

7. Bâtiment suivant la revendication 5 ou 6 **caractérisé en ce que** ladite dalle (50) est réalisée dans une épaisseur supérieure à 20 cm.

8. Bâtiment suivant l'une quelconque des revendications 5 à 7 **caractérisé en ce que** les couches de mousse isolante de fondation et de superstructure ont une épaisseur comprise entre 20 cm et 40 cm.

9. Bâtiment suivant l'une quelconque des revendications 5 à 7 **caractérisé en ce que** les couches de mousse isolante de fondation et de superstructure ont une épaisseur comprise entre 30 et 60 cm

## Claims

1. Method for constructing a building comprising the steps of:
a) creating an excavation (20);
b) applying a blinding layer (23) on the bottom (22) and vertical sides (24) of the excavation (20);
c) applying a layer (40) of insulating foam to the said blinding layer (23);
d) pouring a slab (50) onto the said layer (40) of insulating foam;
e) erecting a framework on the said slab (50);
f) fitting the internal faces of the walls and of the roof (90) inside the said framework;
g) spraying a vapour barrier onto the external face of the said internal face (90);
h) spraying a layer of insulating foam (40) onto the said vapour barrier, the said layer of insulating foam (40) connecting with the upper part (42) of the insulating foam (40) applied to the blinding layer (23) and rising up along the walls of the building to cover the roof;
in order to obtain an insulating envelope that is continuous and free of joins from the foundations to the roof, via the side walls.

2. Construction method according to Claim 1, **characterized in that** the framework is enveloped in a tarpaulin to allow construction to continue in bad weather.

3. Construction method according to either one of the preceding claims, **characterized in that** the utilities (160) such as the water pipes and electricity ducting are installed prior to step (h).

4. Construction method according to any one of the preceding claims, **characterized in that** at least one door or window frame is installed prior to step (h).

5. Low-energy building comprising:
- a foundation laid in an excavation (20), comprising a layer of insulating foundation foam (40) supporting a slab (50);
- a framework erected on the said slab (50);
- an internal face of the walls and of the roof (90) which is applied to the inside of the lightweight structural framework;
- a vapour barrier that is sprayed onto the external face of the said internal face of the walls and of the roof (90);
- a layer of superstructure insulation foam (40) applied by spraying to the external face of the internal faces of the walls and of the roof (90) and/or by pouring in the case of horizontal surfaces, the said insulating foundation layer (40) and the said layer of insulating superstructure foam (40) being contiguous so that they form an envelope that is continuous and free of joins from the foundations to the roof, via the side walls of the building, enveloping the building.

6. Building according to Claim 5, **characterized in that** the said slab (50) is made with a thickness such that it constitutes a thermal inertial mass for the building.

7. Building according to Claim 5 or 6, **characterized in that** the said slab (50) is laid to a thickness in excess of 20 cm.

8. Building according to any one of Claims 5 to 7, **characterized in that** the layers of foundation and superstructure insulating foam are between 20 cm and 40 cm thick.

9. Building according to any one of Claims 5 to 7, **characterized in that** the layers of foundation and superstructure insulating foam are between 30 and 60 cm thick.

## Patentansprüche

1. Verfahren für die Konstruktion eines Gebäudes, das die folgenden Schritte umfasst:
a) Herstellen einer Baugrube (20);
b) Aufbringen einer Sauberkeitsschicht (23) auf den Boden (22) und auf die vertikalen Wände (24) der Baugrube (20);
c) Aufbringen einer Schicht (40) aus isolierendem Schaumstoff auf die Sauberkeitsschicht (23);
d) Gießen einer Platte (50) auf die Schicht (40) aus isolierendem Schaumstoff;
e) Aufbauen eines Skeletts auf der Platte (50);
f) Anbringen von Innenflächen der Mauern und des Dachs (90) innerhalb des Skeletts;
g) Spritzen einer Dampfsperre auf die äußere Seite der Innenfläche (90);
h) Aufbringen durch Spritzen einer Schicht (40) aus isolierendem Schaumstoff auf die Dampfsperre, wobei sich die Schicht (40) aus isolierendem Schaumstoff mit dem oberen Teil (42) des isolierenden Schaumstoffs (40) verbindet, der auf die Sauberkeitsschicht (23) aufgebracht ist, und sich an den Wänden des Gebäudes hochzieht, um das Dach abzudecken;
um eine ununterbrochene Isolierhülle ohne Fugen von der Fundamentgrube bis zum Dach an den seitlichen Wänden vorbei zu erhalten.

2. Konstruktionsverfahren nach Anspruch 1, **dadurch gekennzeichnet, dass** das Skelett mit einer Plane umhüllt wird, um die Fortsetzung der Konstruktion bei ungünstiger Witterung zu ermöglichen.

3. Konstruktionsverfahren nach einem der vorhergehenden Ansprüche, **dadurch gekennzeichnet, dass** Nutzanwendungen (160) wie etwa die Wasser- und Elektrizitätsleitungen vor dem Schritt (h) installiert werden.

4. Konstruktionsverfahren nach einem der vorhergehenden Ansprüche, **dadurch gekennzeichnet, dass** vor dem Schritt (h) wenigstens ein Tür- oder Fensterrahmen installiert wird.

5. Niedrigenergiegebäude, das Folgendes umfasst:
- ein Fundament, das in einer Baugrube (20) verwirklicht ist und eine Fundamentschicht (40) aus isolierendem Schaumstoff, die eine Platte (50) trägt, enthält;
- ein Skelett, das auf die Platte (50) gesetzt ist;
- eine Innenfläche der Mauern und des Dachs (90), die innerhalb des leichten Strukturskeletts angebracht sind;
- eine Dampfsperre, die durch Sprühen auf die Außenseite der Innenfläche der Mauern und des Dachs (90) aufgebracht wird;
- eine Hochbauschicht (40) aus isolierendem Schaumstoff, die durch Sprühen auf die Außenseite der Innenflächen der Mauern und des Dachs (90) und/oder durch Gießen im Fall horizontaler Oberflächen aufgebracht wird, wobei die Fundament-Isolierschicht (40) und die Hochbauschicht (40) aus isolierendem Schaumstoff in der Weise verbunden sind, dass sie eine ununterbrochene Hülle ohne Fugen von dem Fundament bis zum Dach bilden, indem sie über die Seitenwände des Gebäudes verlaufen und das Gebäude umschließen.

6. Gebäude nach Anspruch 5, **dadurch gekennzeichnet, dass** die Platte (50) mit einer Dicke verwirklicht ist, derart, dass sie eine träge thermische Masse für das Gebäude bildet.

7. Gebäude nach Anspruch 5 oder 6, **dadurch gekennzeichnet, dass** die Platte (50) mit einer Dicke von mehr als 20 cm verwirklicht ist.

8. Gebäude nach einem der Ansprüche 5 bis 7, **dadurch gekennzeichnet, dass** die Fundament- und die Hochbauschichten aus isolierendem Schaumstoff eine Dicke im Bereich von 20 cm bis 40 cm haben.

9. Gebäude nach einem der Ansprüche 5 bis 7, **dadurch gekennzeichnet, dass** die Fundament- und die Hochbauschichten aus isolierendem Schaumstoff eine Dicke im Bereich von 30 bis 60 cm haben.
